# EUROPÄISCHE PATENTSCHRIFT

(11) **EP 2 553 590 B1**
(45) Veröffentlichungstag und Bekanntmachung des Hinweises auf die Patenterteilung: **06.05.2015**
(21) Anmeldenummer: 11711871.1
(22) Anmeldetag: 29.03.2011
(51) Int. Cl.: H04L 29/08

(54) **VERFAHREN ZUR ÜBERTRAGUNG VON DATEN ÜBER EINEN CANOPEN-BUS**
METHOD FOR TRANSFERRING DATA VIA A CANOPEN BUS
PROCÉDÉ DE TRANSFÉRER DES DONNÉES VIA CANOPEN BUS

(30) Priorität: 31.03.2010 DE 102010016283
(43) Veröffentlichungstag der Anmeldung: 06.02.2013
(73) Patentinhaber: Schneider Electric Automation GmbH, 97828 Marktheidenfeld (DE)
(72) Erfinder: SCHAFFNER, Heinz, 63322 Rödermark (DE); HAMPIKIAN, Pascal, F-75010 Paris (FR)
(74) Vertreter: Stoffregen, Hans-Herbert
(86) Internationale Anmeldenummer: PCT/EP2011/054872
(87) Internationale Veröffentlichungsnummer: WO 2011/120999

(56) Entgegenhaltungen:
- US-A1- 2005 002 417
- US-A1- 2005 256 964
- US-A1- 2010 007 311
- BOTERENBROOD H: "CANopen high-level protocol for CAN-bus", 20000320, [Online] Nr. Version 3.0, 20. März 2000 (2000-03-20), Seiten 1-23, XP002589005, Gefunden im Internet: URL:http://www.nikhef.nl/pub/departments/c t/po/doc/CANopen30.pdf> [gefunden am 2010-06-25]

## Beschreibung

Die Erfindung bezieht sich auf ein Verfahren zur Übertragung von Daten zwischen einem ersten Automatisierungsgerät wie Bedien-PC oder zentrales Steuergerät und zumindest einem zweiten Automatisierungsgerät wie Feldgerät über einen CAN-open-BUS unter Verwendung eines Service-Daten-Objekts als SDO-Service, wobei über einen in dem ersten Automatisierungsgerät implementierten SDO-Client eine Download- oder Upload-Anfrage an einen in dem zumindest einen zweiten Automatisierungsgerät implementierten SDO-Server erfolgt, wobei die Daten durch eine in dem ersten Automatisierungsgerät oder dem zumindest einen zweiten Automatisierungsgerät implementierte Anwendung in einen CANopen-Frame gekapselt werden, wobei der CANopen-Frame mit den gekapselten Daten per SDO-Service in ein oder aus einem in einem Objektverzeichnis des SDO-Servers definierten Daten-Tunnel-Objekt übertragen oder gesendet wird und wobei die gekapselten Daten durch die in dem ersten oder dem zumindest einen zweiten Automatisierungsgerät implementierte Anwendung entkapselt werden.

Ein Vorfahren der eingangs genannten Art ist in der US-A-2010/0007311 beschrieben. Diese bezieht sich auf ein Batterie-Modul, umfassend Zellen, zwei externe Anschlüsse, eine Nachrichten-Kommunikations-Infrastruktur, eine Modulsteuerungseinheit mit Nachrichten-Verarbeitungseinheit, welche mit der Infrastruktur verbunden ist, um Nachrichten zu senden und zu empfangen. Es wird ein Verfahren zur Übertragung von Daten zwischen einem Steuergerät und Modulen über einen CANopen-Bus beschrieben. Die Datenübertragung erfolgt unter Verwendung eines Service-Daten-Objekts als SDO-Service. Dabei dienen die Module und das Steuergerät als SDO-Client.

Die US-A-2005/0002417 bezieht sich auf Systeme und Verfahren zur Durchführung von Protokoll-Umwandlungen in einem Umfeld, umfassend eine Arbeitsmaschine mit einem oder mehreren Modulen, die über ein oder mehrere Datenverbindungen miteinander gekoppelt sind. Solche Systeme und Verfahren können ein oder mehrere Gateways zur Durchführung von "Tunneling" oder "Bridging"-Operationen ausweisen. "Tunneling"-Prozesse können den Empfang einer Nachricht von einem Quell-Modul in einem ersten Protokoll, Entkapselung der Nachrichten in Übertragungseinheiten eines zweiten Protokolls und Übertragung der entkapselten Nachricht über das zweite Protokoll beinhalten.

CANopen wurde von der CiA (CAN In Automation), einer Nutzer- und Herstellervereinigung für CANopen, entwickelt und ist seit Ende 2002 als europäische Norm EN 50325-4 standardisiert. CANopen verwendet als Übertragungstechnik die Schichten 1 und 2 eines ursprünglich für den Einsatz im Automobil entwickelten CAN-Standards (ISO 11898-2).

In CANopen sind mehrere Grunddienste (Dienstprimitive) definiert. Diese Grunddienste sind:
- Request: Anforderung eines CANopen-Dienstes durch eine Anwendung,
- Indication: Meldung an die Anwendung, dass ein Ergebnis oder eine bestimmte Nachricht vorliegt,
- Response: Antwort der Anwendung an eine Indication,
- Confirmation: Bestätigung an die Anwendung, dass ein CANopen-Dienst ausgeführt wurde.

Die Art und Weise, wie CANopen-Geräte Daten miteinander austauschen, ist über ein CANopen-Kommunikationsprofil geregelt. Wie bei allen anderen Feldbus-Protokollen, wird zwischen Echtzeit-Daten und Parameter-Daten unterschieden. CANopen ordnet diesen vom Charakter her völlig unterschiedlichen Datenarten jeweils passende Kommunikationselemente bzw. Kommunikationsobjekte zu.

Die Kommunikationsobjekte können folgendermaßen gegliedert werden:
- Service-Daten-Objekte (SDO) zur Parametrisierung von Objektverzeichniseinträgen,
- Prozess-Daten-Objekte (PDO) zum Transport von Echtzeitdaten,
- Netzwerk-Management-Objekte (NMT) zur Steuerung des Zustandsautomaten des CANopen-Geräts und zur Überwachung der Konten,
- weitere Objekte wie Synchronisationsobjekt, Zeitstempel und Fehler-Nachrichten.

Alle Kommunikationsobjekte und alle Anwenderobjekte werden in einem Objektverzeichnis (englisch: Object Dictionary (OD)) zusammengefasst. Das Objektverzeichnis ist im CANopen-Gerätemodell das Bindeglied zwischen der Anwendung und der CAN-open-Kommunikationseinheit. Jeder Eintrag im Objektverzeichnis steht für ein Objekt und wird durch einen Index wie 16-Bit-Index gekennzeichnet. Ein Index kann wiederum bis zu 265 Subindizes enthalten. Dadurch können unabhängig von den "11-Bit-Indentifier" bis zu 65.536 x 254 Elemente unterschieden werden.

In den Kommunikationsprofilen ist die Zuordnung von Kommunikations-und Geräteprofilobjekten zu einem jeweiligen Index genau definiert. Somit wird mit dem Objektverzeichnis eine eindeutige Schnittstelle zwischen der Anwendung und der Kommunikation nach außen definiert. So ist beispielsweise jedem CANopen-Knoten im Netz bekannt, dass auf Index 1017 h das "Heart Beat-Intervall" zu finden ist, und jeder Knoten oder jedes Konfigurationsprogramm kann lesend oder schreibend darauf zugreifen.

Für jedes Kommunikationsobjekt existiert eine eindeutige COB-ID (Communication Objekt Identifier) im Netzwerk. Die COB-ID besteht aus 32-Bit-Werten, wobei die ersten beiden Bit jeweils eine objektspezifische Bedeutung haben. In einem 11-Bit-CAN-Netz haben die folgenden 19 Bits (29 bis 11) den Wert 0 und die letzten Bits (10 bis 0) entsprechen dem CAN-Indentifier.

Service-Daten-Objekte (SDO) stellen einen Dienst zum Zugriff auf das Objektverzeichnis bereit. Jedes CANopen-Gerät benötigt mindestens einen SDO-Server, welche SDO-Anforderungen von anderen Geräten entgegennimmt und bearbeitet. Die Default-Einstellungen nutzen Nachrichten zum SDO-Server eines Gerätes die Knotennummer des Empfängers plus 1536 als COB-ID bzw. als "Identifier" für die CAN-Nachricht. Für die Antwort des SDO-Servers wird als "Identifier" die Knotennummer des Senders plus 1408 verwendet. Mit diesen relativ hohen und somit niederpriorisierten ID's werden Einträge im Objektverzeichnis übertragen. Für diesen SDO-Transfer existiert ein Protokoll, welches beispielsweise 4 Byte benötigt, um die Senderichtung, den Index und den Subindex zu codieren. Somit bleiben nur noch 4 Byte von den 8 Byte eines CAN-Datenfeldes für den Dateninhalt übrig. Für Objekte, deren Dateninhalt größer als 4 Byte ist, gibt es noch zwei weitere Protokolle zum fragmentierten SDO-Transfer.

Im Gegensatz zu dem in der priorisierten und mit Protokolldaten überladenen SDO-Transfer stellen die Prozessdatenobjekte (PDO) eine schnellere Möglichkeit zum Transport von Prozessdaten zur Verfügung.

Die zum PDO-Transfer genutzten Identifier liegen bei Default-Einstellungen im COB-ID-Bereich von 385 bis 1407 und sind somit höher priorisiert als die SDO-Nachrichten. Weiterhin enthalten sie nur Nutzdaten und somit stehen 8 Byte zur Verfügung.

Der Inhalt der Nutzdaten wird über PDO-Mapping-Einträge bestimmt. Dies sind Objekte im Objektverzeichnis, die wie eine Zuordnungstabelle festlegen, welche Daten über ein PDO übertragen werden. Diese Daten sind wiederum Inhalte anderer Objekte des Objektverzeichnisses. In einem PDO können auch die Werte mehrerer Objekte übertragen werden und die Empfänger des PDO können entsprechend ihrer PDO-Mapping-Einträge nur Teile der Daten nutzen.

Beim Empfang eines PDO werden wiederum die Daten entsprechend der Mapping-Einträge in jeweils andere Objekte des Objektverzeichnisses, z. B. in ein digitales Ausgangsobjekt, geschrieben. Die Übertragung von PDO's kann zyklisch, ereignisorientiert, per Abfrage oder synchronisiert geschehen.

Das MODBUS-Protokoll ist ein Kommunikationsprotokoll, das auf einer Master-Slave- bzw. Client/Server-Architektur basiert. Dies wurde 1979 von Gould-Modicon für die Kommunikation mit speicherprogrammierbaren Steuerungen entwickelt. In der Industrie hat sich der MODBUS zu einem de facto-Standard entwickelt, da es sich um ein offenes Protokoll handelt.

Mittels MODBUS können ein Master, z. B. ein PC, und mehrere Slaves (z. B. Mess- und Regelsysteme; Feldgeräte) verbunden werden. Es gibt zwei Versionen: eine für die serielle Schnittstelle (EIA-232 und EIA-485) und eine für Ethernet.

Bei der Datenübertragung werden drei verschiedene Betriebsarten unterschieden:
- MODBUS ASCII
- MODBUS RTU
- MODBUS TCP.

Jeder Busteilnehmer muss eine eindeutige Adresse besitzen.

CANopen, MODBUS, PROFIBUS und Ethernet-basierende Netzwerke werden in der Automatisierungstechnik eingesetzt, um eine Kommunikation zwischen Datenverarbeitungssystemen und peripheren Geräten herzustellen. Beispielsweise werden programmierbare logische Controller (PLC), Feldbus-Koppler, IO/-Module, Antriebssteuergeräte (Motion Controller), Anzeigegeräte über ein lokales Netzwerk (Feldbus) miteinander gekoppelt. Sofern die Feldgeräte an einem MODBUS angeschlossen sind, umfassen diese einen MODBUS-Interpreter, um die über MODBUS übertragenen MODBUS-Nachrichten zu interpretieren.

Bekannte Systeme und Verfahren ermöglichen in aller Regel eine Parametrierung von Feldgeräten mittels Konfigurationsdateien, wobei gewisse vorbestimmte Funktionalitäten des jeweiligen Feldgerätes, je nach Bedarf und Einsatzbereich des jeweiligen Gerätes lediglich ein- oder ausschaltbar sind, bzw. aktiviert oder deaktiviert werden. Die Parametrierung und/oder Konfigurierung erfolgt üblicherweise über eine direkte Verbindung zwischen einem Datenverarbeitungsgerät wie PC (Personal Computer), Laptop oder PDA (Personal Digital Assistent) und dem Feldgerät durch Übertragung einer MODBUS-Nachricht, die in dem Feldgerät interpretiert werden kann. Die Konfigurierung jedes einzelnen Feldgerätes über eine Eins-zu-Eins-Verbindung ist aufwendig und zeitintensiv.

Bei Verwendung eines derartigen Feldgerätes mit MODBUS-Schnittstelle in einem CAN-open-Feldbus tritt das Problem auf, dass die CANopen-Nachrichten durch die MODBUS-Schnittstelle nicht auswertbar sind.

Andererseits liegen Anwendungsdaten und -parameter eines CANopen-Gerätes im CANopen als Objekte vor, welche in dem CANopen-Objektverzeichnis abgelegt sind.

Wenn eine Anwendung mehr Daten/Parameter erfordert, als in dem CANopen-Objektverzeichnis vorliegen, kann auf diese Information über ein CANopen-Netzwerk nicht zugegriffen werden.

Davon ausgehend liegt der vorliegenden Erfindung die Aufgabe zu Grunde, ein Verfahren der eingangs genannten Art derart weiterzubilden, dass die Konfiguration von Feldgeräten an CANopen vereinfacht wird.

Die Aufgabe wird erfindungsgemäß u. a. dadurch gelöst, dass das Verfahren zum Konfigurieren und/oder Parametrieren des zumindest einen einen MODBUS-Server aufweisenden zweiten Automatisierungsgeräts über den CANopen-Bus verwendet wird, dass die Daten als Konfigurations- und/oder Parametrierungsdaten in Form eines MODBUS-Frames erzeugt und in den CANopen-Frame gekapselt werden und dass der CANopen-Frame mittels SDO-download in das Daten-Tunnel-Objekt des SDO-Servers des zumindest einen zweiten Automatisierungsgerätes geladen und entkapselt wird.

Durch das erfindungsgemäße Verfahren wird eine Kapselung von Nachrichten wie MODBUS-Nachrichten in eine CANopen-Nachricht erreicht. Durch das Kapsel bzw. Tunneln von gerätespezifischen Daten wie Konfigurations- und/oder Parametrierungsdaten wird erreicht, dass auch Automatisierungsgeräte über den CANopen-Bus von einer zentralen Stelle wie Bedien-PC oder zentralem Steuergerät konfiguriert werden können, die zur Verarbeitung der gerätespezifischen Daten nur über eine von CANopen verschiedene Schnittstelle wie MODBUS-Schnittstelle verfügen und nach dem Stand der Technik über eine Eins-zu-eins-Verbindung hätten konfiguriert werden müssen.

Das erfindungsgemäße Verfahren kann somit zum Konfigurieren und/oder Parametrieren von einen MODBUS-Server aufweisenden Feldgeräten über einen CANopen-Bus verwendet werden, wobei Konfigurations- und/oder Parametrierungsdaten als MODBUS-Frame in ein CANopen-Frame gekapselt werden, welches mittels SDO-download in ein Daten-Tunnel-Objekt des Feldgeräts geladen und entkapselt wird.

Eine bevorzugte Verfahrensweise zeichnet sich dadurch aus, dass eine Datenübertragung von dem ersten Automatisierungsgerät zu dem zumindest einen zweiten Automatisierungsgerät durch einen SDO-Download zu dem Daten-Tunnel-Objekt des Objektverzeichnisses initiiert durch die im ersten Automatisierungsgerät implementierte Anwendung ausgeführt wird.

Gemäß einer weiteren bevorzugten Verfahrensweise ist vorgesehen, dass eine Datenübertragung von dem zumindest einen zweiten Automatisierungsgerät zu dem ersten Automatisierungsgerät durch einen SDO-Upload aus dem Daten-Tunnel-Objekt initiiert durch die im ersten Automatisierungsgerät implementierte Anwendung ausgeführt wird, wobei die Anwendung die in dem zumindest einem zweiten Automatisierungsgerät implementierte Anwendung zyklisch anspricht.

Zur Datenübertragung kann vorzugsweise ein vorgegebener SDO-Server-Kanal verwendet werden, wobei bei hohen Übertragungsraten gekapselter Daten ein zweiter SDO-Server-Kanal eingesetzt wird.

Das Verfahren zeichnet sich des Weiteren dadurch aus, dass für eine Simplex- oder Halb-Duplex-Datenübertragung ein einziges Daten-Tunnel-Objekt ausreichend ist.

Für eine Voll-Duplex-Datenübertragung werden zumindest zwei Daten-Tunnel-Objekte in dem Objektverzeichnis des SDO-Servers verwendet.

Zur Parametrierung und/oder Konfiguration von Feldgeräten über einen CANopen-Bus ist vorgesehen, dass die in dem ersten Automatisierungsgerät implementierte Anwendung ein Feld-Geräte-Tool und zumindest einen Geräte-Typ-Manager umfasst, mittels dem Parametrierungs- bzw. Konfigurationsdaten in Form eines MODBUS-Frames erzeugt werden, dass der MODBUS-Frame in einem CANopen-Frame gekapselt wird und dass der CANopen-Frame über SDO-Download in das Daten-Tunnel-Objekt des SDO-Servers des zumindest einen zweiten Automatisierungsgeräts übertragen wird.

Bei einer Übertragung von Daten von dem zumindest einen zweiten Automatisierungsgerät zu dem ersten Automatisierungsgerät muss ein Protokoll-spezifischer Teil des in dem ersten Automatisierungsgerät implementierten Geräte-Typ-Managers (Device Type Manager (DTM)) das zumindest eine zweite Automatisierungsgerät mit der Anwendung regelmäßig anfragen, wobei eine in der Anwendung implementierte CANopen-Kommunikation DTM die SDO-Upload-Anfrage ausführt.

Das Daten-Tunnel-Objekt ist vorzugsweise vom Typ Domain.

Zur Übertragung von Daten an eine Vielzahl von an einem CANopen-Bus angeschlossener Feldgeräte wird der CANopen-Frame mit gekapseltem MODBUS-Frame über eine in dem ersten Automatisierungsgerät implementierte Routing-Funktionalität zu dem zumindest einen zweiten Automatisierungsgerät mit zugehöriger Adresse gesendet.

Als gekapselte Daten werden vorzugsweise Parameter- und/oder Konfigurationsdaten sowie Steuerprogramme übertragen.

Die Datenübertragung kann sequentiell für jedes der zweiten Automatisierungsgeräte ausgeführt wird und/oder dann ausgeführt werden, wenn eines der zweiten Automatisierungsgeräte an den CANopen-Bus angeschlossen wird.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Struktur eines Automatisierungssystems
- Fig. 2: ein Hardware-Blockschaltbild eines Feldgerätes,
- Fig. 3: eine schematische Darstellung der Kapselung von Daten auf CANopen,
- Fig. 4a-4c: eine schematische Darstellung von Übertragungsarten gekapselter Daten über CANopen,
- Fig. 5: eine Struktur eines Daten-Tunnel-Objekts,
- Fig. 6: eine Tabelle mit individuellen Daten-Tunnel-Objekten,
- Fig. 7: eine Bitfolge eines Datenblocks (Tunnel-Header),
- Fig. 8: eine schematische Darstellung eines Datentransfers zwischen CANopen-Client und CANopen-Server,
- Fig. 9: eine schematische Darstellung eines Datentransfer am Beispiel eines gekapselten MODBUS-Frames,
- Fig. 10: ein CANopen-Frame mit eingekapseltem MODBUS-RTU-Frame,
- Fig. 11: eine Struktur eines Automatisierungsgerätes mit Datenkapselung über mehrere Ebenen.

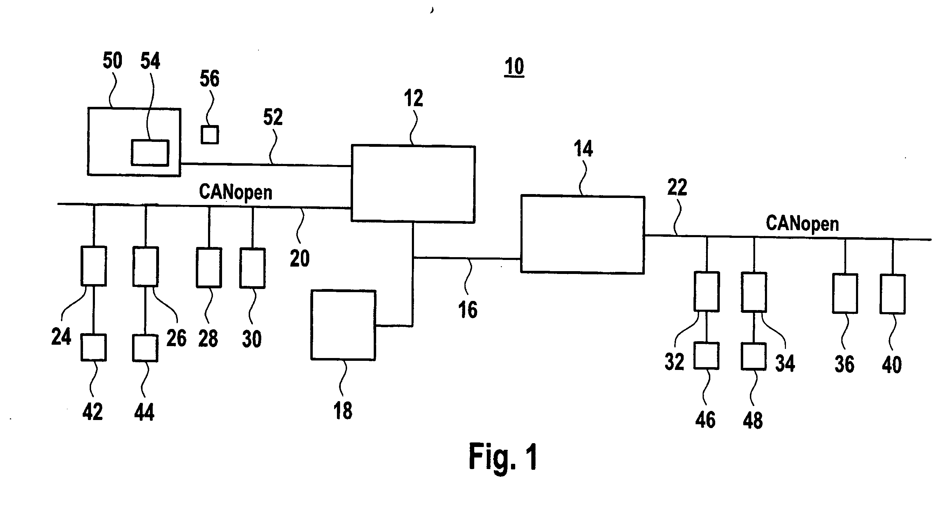

Fig. 1 zeigt rein schematisch ein Automatisierungssystem, welches im dargestellten Ausführungsbeispiel Logik-Controller 12, 14 umfasst, die über ein Ethernet-Netzwerk 16 miteinander gekoppelt sind. Des Weiteren ist ein HMI-Controller 18 als Bedien-Terminal vorgesehen, der ebenfalls mit dem Ethernet-Netzwerk 16 verbunden ist.

Die Logik-Controller 12, 14 sind jeweils über einen CANopen-Bus 20, Feldbus-Geräten 24, 26, 28, 30 bzw. 32, 34, 36, 40 verbunden. Bei den Feldbus-Geräten 24, 26 bzw. 32, 34 kann es sich beispielsweise um Drive-Controller zur Ansteuerung von Antrieben oder um Motion-Controller handeln. Die Feldbus-Geräte 28, 30 bzw. 36, 40 können als Ein-/Ausgabegeräte realisiert sein.

Zur Konfiguration der Controller 12, 14, 18 und/oder der Feldbus-Geräte 24 - 40 ist der Controller 12 über eine einzige Verbindung 52 mit einem Konfigurations-PC 50 verbunden. Im beschriebenen Ausführungsbeispiel ist die Verbindung 52 als USB-Verbindung ausgebildet.

In dem Konfigurations-PC 50 ist ein Software-Tool 54 zur Konfigurierung und/oder Parametrierung der Controller 14, 15, 18 und/oder der Feldgeräte 24 - 40 implementiert. Mit dem Software-Tool können Geräte-Beschreibungsdateien 56 erzeugt werden, die über die USB-Verbindung 52, die Controller 12, 14 sowie die CANopen-Busse 20, 24 zu den Feldbus-Geräten 24 - 40 übertragen werden und in diesen interpretiert und ausgeführt werden können.

Um an dem CANopen-Bus 20, 22 auch Feldbus-Geräte einzusetzen, die zur Interpretation einer Gerätebeschreibungsdatei einen MODBUS-Schnittstelle aufweisen und üblicherweise über eine MODBUS-Schnittstelle konfiguriert und/oder parametriert werden, ist erfindungsgemäß vorgesehen, dass Daten in Form von beispielsweise der Gerätebeschreibungsdatei gekapselt über den CANopen-Bus 20, 22 übertragen werden.

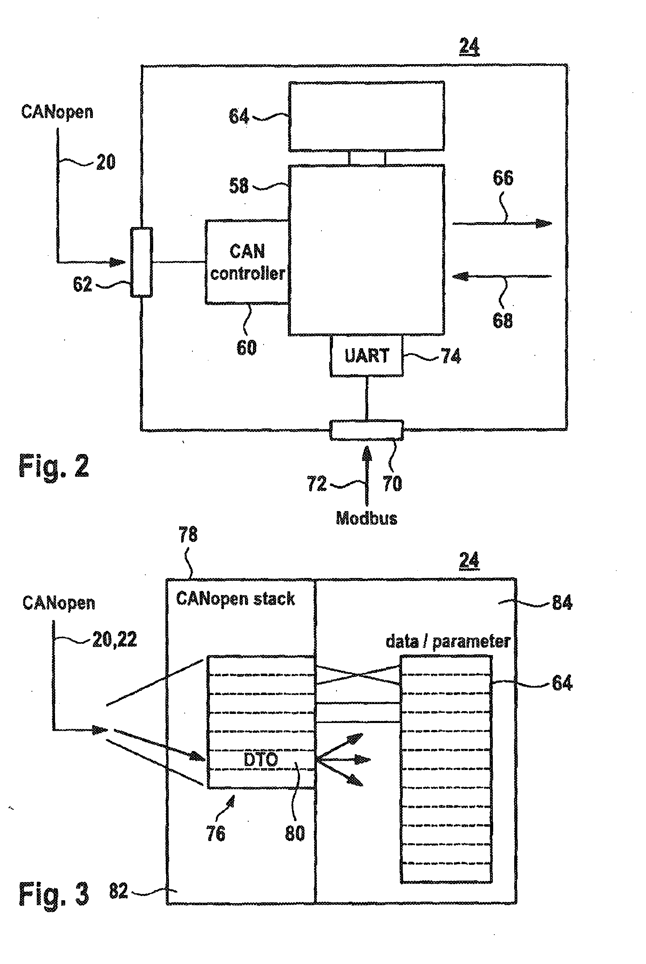

Fig. 2 zeigt am Beispiel des Feldbus-Gerätes 24 rein schematisch die Hardware-Struktur eines Feldbus-Gerätes. Diese umfasst im Wesentlichen eine Datenverarbeitungseinheit 58 wie Mikro-Controller, der über eine Kommunikationsschnittstelle 60 wie CAN-Controller mit dem CANopen-Bus 20 verbunden ist. Zum Anschluss des CANopen-Busses 20 ist ein Steckverbinder 62 vorgesehen.

Zur Speicherung von Programmen und/oder Daten ist der Mikrocontroller 58 mit einem Speicherelement 64 verbunden. Ferner sind Schnittstellen 66, 68 für Peripheriegeräte vorgesehen.

Das dargestellte Feldbus-Gerät 24 weist neben dem Anschluss 62 für den CANopen-Bus 20 auch einen Anschluss 70 zur Verbindung mit einem MODBUS 72 auf, über den das Feldbus-Gerät 24 konfiguriert werden kann. Der MODBUS 72 ist über eine Schnittstelle 74 wie UART mit dem Mikrocontroller 58 gekoppelt.

Üblicherweise liegen Anwendungsdaten und -parameter eines CANopen-Gerätes in CANopen als Objekte vor, welche in einem CANopen-Objektverzeichnis 76, wie dies in Fig. 3 dargestellt ist, als Teil eines CANopen-Stacks 78 implementiert sind.

Wenn allerdings eine Anwendung mehr Daten bzw. Parameter hat als in dem CAN-open-Objektverzeichnis 76 vorliegen, kann auf diese Information über das CANopen-Netzwerk 20, 22 nicht zugegriffen werden.

Gemäß der Erfindung wird ein Verfahren zur Kapselung von Daten vorgeschlagen, welches einen transparenten Zugriff zu allen Daten bzw. Parametern des CANopen-Gerätes 24 ermöglicht, unabhängig davon, ob diese in dem Objektverzeichnis 76 enthalten sind oder nicht.

Zur Durchführung des erfindungsgemäßen Verfahrens wird ein Objekt "Data-Tunnel-Object" (DTO) 80 definiert, welches in dem Objektverzeichnis 76 des CANopen-Stacks 78 eines CANopen-Slaves 82 implementiert ist. Die durch die Objekte des Objektverzeichnisses 76 bereitgestellten Daten bzw. Parameter können in den Speicher 64 abgelegt werden und stehen einer Anwendung 84 zur Verfügung, die beispielsweise in dem FELDBUS-Gerät 24 durch den Mikrocontroller 58 ausgeführt wird.

Der Datentransfer durch Kapselung basiert auf den in CANopen standardisierten SDO-Service (Upload/Download) zu dem erfindungsgemäßen neuen Data-Tunnel-Objekt (DTO) 80, welches sich in dem CANopen-Slave befindet. Abhängig von der Menge der zu übertragenen Daten beinhaltet der CANopen-Stack 78 das Daten-Tunnel-Objekt (DTO) 80 als geeigneten Typ des Service-Daten-Objekts (SDO) entweder expedited, segmentiert oder als Block. Das Daten-Tunnel-Objekt (DTO) 80 ist für einen Benutzer transparent.

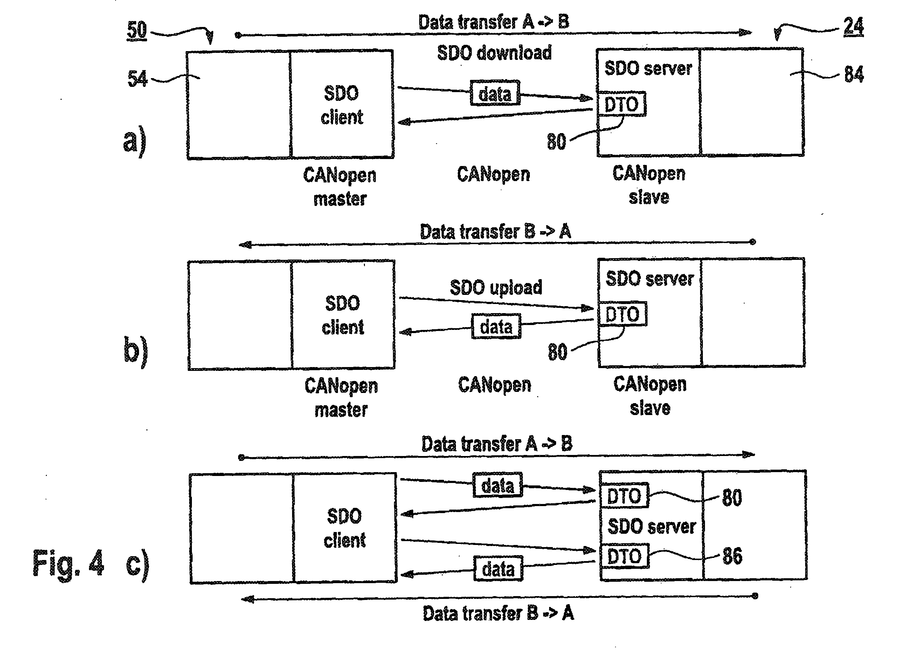

Ein Beispiel einer transparenten Datenübertragung über CANopen ist in Fig. 4 dargestellt. In diesem Fall übernimmt der Bedien-PC 50 die Funktion eines CANopen-Masters, in dem ein SDO-Client sowie die Bediener-Software 54 implementiert sind. Das Feldbus-Gerät 24 hat die Funktion eines CANopen-Slaves, in dem ein SDO-Server sowie ein Anwenderprogramm 84 implementiert sind. Der SDO-Server umfasst den CANopen-Stack 78 sowie das Objektverzeichnis 76 mit implementierten Data-Tunnel-Objekt (DTO) 80.

Im Fall einer Segment-SDO oder Block-SDO wird der SDO-Service in vielfache SDO-Anfrage-/Antwort-Frames gesplittet.

Aufgrund der Client-/Server-Struktur initiiert der Bedien-PC 50 mit dem SDO-Client stets die Übertragung:
- Datenübertragung von Anwendung 54 zu Anwendung 84 wird ausgeführt mit einem SDO-Download nach DTO 80, welche durch Anwendung A initiiert wird,
- Datenübertragung von Anwendung 84 zu Anwendung 54 wird ausgeführt mit einem SDO-Upload von DTO 80, ebenfalls initiiert durch Anwendung 54, wobei Anwendung 54 die Anwendung 84 auf zyklischer Basis in üblicher Weise ansprechen muss (polling).

Da die Übertragung der gekapselten Daten standardisierte SDO-Übertragungen sind, kann der vorgegebene (default) SDO-Server-Kanal verwendet werden. Bei intensiver Übertragung gekapselter Daten kann ein zweiter SDO-Server-Kanal zweckdienlich sein, wie dies in Fig. 4 c) dargestellt ist.

Ein einziges Daten-Tunnel-Objekt (DTO) 80 ist für eine Duplex- oder Halbduplex-Datenübertragung ausreichend. Für eine in Fig. 4c) dargestellte Vollduplex-Übertragung, d. h. unabhängige Übertragung von Anwendung 54 nach Anwendung 84 und simultane Übertragung von Anwendung 84 nach Anwendung 54, sollten zwei Daten-Tunnel-Objekte 80, 86 eingesetzt werden.

Der beschriebene "Tunnel-Mechanismus" stellt ein Mittel zum Transport von Datenblöcken zur Verfügung. Die Anwendung 54 und die Anwendung 84 bestimmen die exakte Verwendung des "Tunnels", d. h. z. B. welche Typen von Datenblöcken übertragen werden und welches Protokoll verwendet wird.

Im Falle von Feldgerät-Tool- (Field Device Tool; FDT)) und/oder Gerätetyp-Manager-(Device Type Manager) (DTM))-Technologie kann diese Technologie in der Anwendung 54 implementiert sein, wodurch über FDT und/ oder DTM eine Verbindung zu einem bestimmten Feldgerät 24 - 40 herstellt wird, auf der die Anwendung 84 läuft. Der "Tunnel" kann verwendet werden, um jedes standardisierte oder private Protokoll, welches die Anwendungen 54, 84 akzeptieren, transparent zu übertragen.

Insbesondere für eine Übertragung von Anwendung 84 nach Anwendung 54 muss der protokollspezifische Teil des Geräte-DTM die Übertragung initiieren. Die Übertragung wird dann von dem CANopen-Kommunikation DTM in Form einer SDO-Upload-Anfrage ausgeführt.

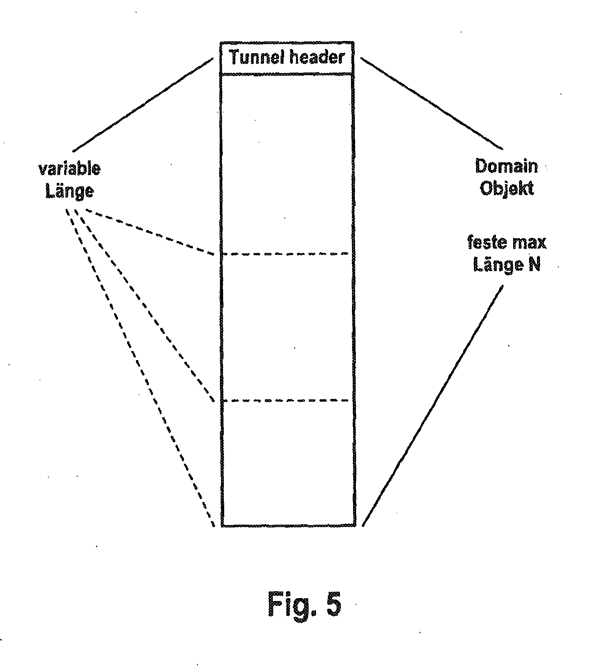

Das Daten-Tunnel-Objekt (DTO) 80 ist vom Typ "Domain" und ist in Fig. 5 schematisch dargestellt. Dies erlaubt die Übertragung von Datenblöcken von 1 bis N Byte, wobei die Länge eines Blocks von einer Übertragung zur nächsten variieren kann. Die Länge N des Domain-Objekts, welches in dem Objektverzeichnis 76 erstellt wurde, limitiert die maximale Anzahl von Datenbytes pro Block. Die Länge N ist hier nicht spezifiziert, da diese von der jeweiligen Anwendung abhängig ist.

Das erste Byte des Datenblocks ist immer ein Tunnel-Header-Byte, wie in Fig. 5 dargestellt.

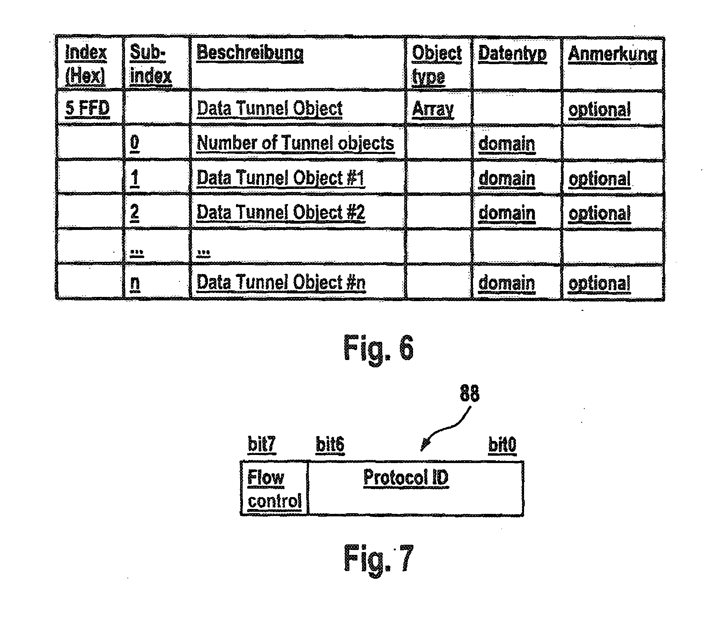

Fig. 6 zeigt eine Tabelle zur Beschreibung der Daten-Tunnel-Objekte 80. Beispielsweise ist dem Daten-Tunnel-Objekt 80 der Objektindex 5FFDh zugeordnet. Ferner ist dem Daten-Tunnel-Objekt der Objekttyp "Array" zugeordnet, welcher die Implementierung verschiedener Tunnelobjekte pro Gerät erlaubt. Ein Mappen der Objekte in ein PDO (Prozessdatenobjekt) erfolgt nicht.

Das erste Byte, welches über das Daten-Tunnel-Objekt (DTO) übertragen wird, ist stets ein Tunnel-Header-Byte 88, welches in Fig. 7 dargestellt ist. Das Tunnel-Header-Byte 88 umfasst ein Flow-Control-Bit sowie sieben Protokoll-ID-Bites.

Das Flow-Control-Bit kann für eine einfache Ablaufsteuerung (Flow Control) verwendet werden. Wenn der SDO-Server nicht imstande ist, weitere Datenblöcke zu empfangen, kann er diese Situation durch Setzen des Bits auf 1 anzeigen. Wenn das auf dem Datenbus (Tunnel) bereitgestellte Protokoll das richtige Mittel zur Ablaufsteuerung (Flow Control) bereitstellt, kann dieses Bit überflüssig sein.
- Flow-Control =: 0 (Default): Der Server ist imstande, weitere Datenblöcke zu empfangen
- Flow-Control = 1:: Der Server ist nicht imstande, weitere Datenblöcke zu empfangen
- Protokoll-ID:: Dieses Feld kennzeichnet den Typ des auf dem Tunnel verwendeten Protokolls. Die Information ist für Debugging- und Analyse-Anwendungszwecke nützlich
- Protokoll-ID = 00h:: MODBUS RTU Einkapselung, die Datenblöcke enthalten MODBUS RTU-Frames
- Protokoll-ID = 01h-3Fh:: Diese ID's sind reserviert für standardisierte Protokolle
- Protokoll-ID = 40h-7Fh:: gerätespezifisch; Diese ID's können verwendet werden für nicht-standardisierte Protokolle.

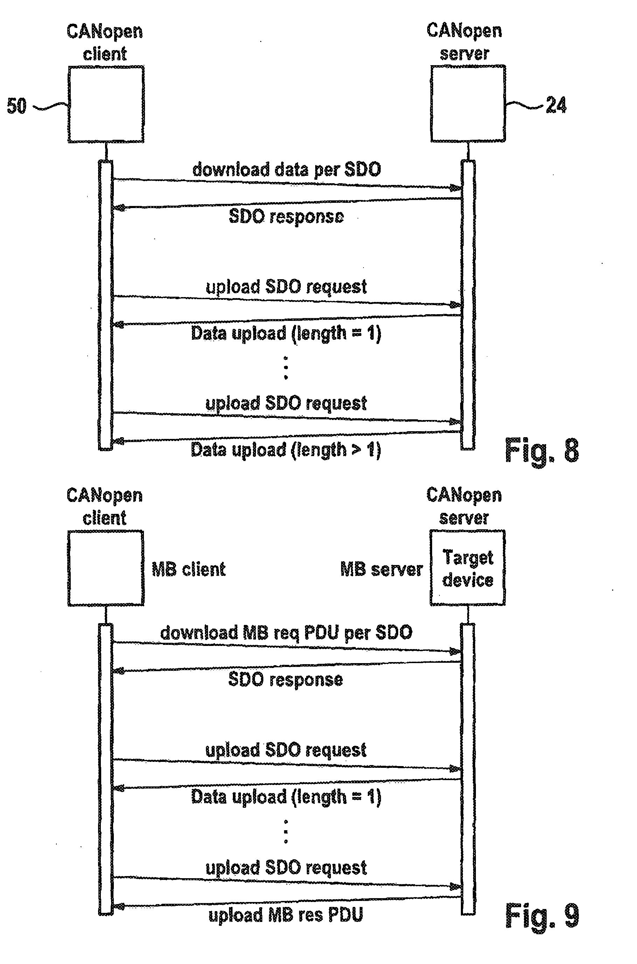

Der erfindungsgemäße Tunnel-Mechanismus erlaubt die Übertragung von Datenblöcken in beiden Richtungen (Up-/Download), wie dies in Fig. 8 dargestellt ist. Ein Download sowie auch ein Upload werden beide von dem CANopen-Client, im vorliegenden Fall von dem Bedien-PC 50, initiiert. Dies resultiert aus der Client-Server-Struktur der SDO-Verbindung.

Im Falle eines Uploads muss der Client den Datenblock anfragen. Eine Blocklänge von 1 Byte indiziert einen leeren Datenblock, da in diesem Fall der Block nur das Tunnel-Header-Byte 88 enthält.

Wenn der Datenblock größer als 4 Byte ist, wird die Segmentübertragung oder Block-übertragung verwendet. Dies geschieht automatisch durch den CANopen-Stack 78 und die Benutzeranwendung 84 muss sich darum nicht kümmern.

Fig. 9 zeigt rein schematisch die Einkapselung einer MODBUS-Nachricht bzw. von MODBUS-Daten. In diesem Fall wird nur ein Daten-Tunnel-Objekt (DTO) 80 verwendet. Die übertragenen Datenblöcke umfassen MODBUS-RTU-Frames. Das Flow-Control-Bit des Tunnel-Headers 88 wird in diesem Fall nicht benutzt.

Eine MODBUS-Transaktion besteht stets aus einer von dem Client 50 gesendeten Anfrage und einer von dem Server 24 gesendeten Antwort. Eine Ausnahme dieser Regel ist eine Anfrage Rundruf (broadcast)- Adresse 0, wobei die Antwort entfällt. Die Transaktion startet mit der Übertragung der MODBUS-Anfrage an das Feldbus-Gerät 24 über SDO-Download (Befehl: Download MB REQ PDU PER SDO). Anschließend fragt der MODBUS-Client eine MODBUS-Antwort (SDO Response) an. Wenn das Feldbus-Gerät die MODBUS-Antwort nicht sofort bereithält, besteht der hochgeladene (uploaded) Datenblock nur aus dem Tunnel-Header 88 und hat somit die Länge 1. Die Anfrage (polling) wird wiederholt bis die MODBUS-Antwort empfangen wird.

MODBUS-RTU-Frames sind auf 254 Bites begrenzt, so dass die Länge von 255 Bites für das Domain-Objekt ausreichend sein sollte. Abhängig von den unterstützten MODBUS-Funktionen kann die Domaine aber auch kleiner sein.

Der MODBUS-Client muss sich nicht in dem CANopen-Client befinden. Im Falle eines entfernten (remote) MODBUS-Clients kann der CANopen-Client die entsprechenden Frames nachsenden (forward).

Fig. 9 zeigt eine schematische Darstellung des Datentransfers. Im Falle von Segment-SDO oder Block-SDO werden Vielfach-SDO-Frames übertragen, die hier jedoch nicht dargestellt sind.

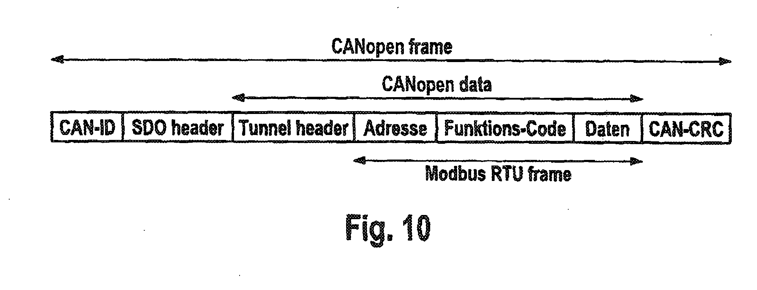

Fig. 10 zeigt einen MODBUS-RTU-Frame als Teil eines CANopen-Frames. Der MODBUS-RTU-Frame ist zusammengesetzt aus Adresse (1 Byte), Funktionscode (1 Byte) sowie Datenfeld (N Byte).

Basierend auf dieser Struktur müssen Standard-MODBUS-Frames mit mindestens 7 CANopen-Datenbytes (Tunnel-Header, Adresse, Funktions-Code), 4 Bytes für Startadresse und Länge verwendet werden (Segment- oder Block-SDO).

Jedoch können MODBUS-Exception-Frames lediglich 4 CANopen-Daten-Bytes aufweisen, nämlich Tunnel-Header, Adresse, Funktions-Code sowie ein Byte-Fehlercode. In diesem Fall kann "expedited"-SDO ebenfalls verwendet werden. Es hängt vom Server-Gerät ab, ob dieses mit "expedited-" oder Segment-SDO auf eine SDO-Upload-Anfrage antwortet.

Wenn das Zielgerät, im vorliegenden Fall das Feldgerät 24 oder der Controller 12, eine interne Routing-Funktionalität bereitstellt, kann die Nachricht zu der zugehörigen Adresse, unter Beachtung der MODBUS-Adressregeln gesendet werden. Wenn beispielsweise die Adresse auf 00 gesetzt ist oder wenn die Adresse nicht existiert, dann wird keine Antwort erfolgen.

Wenn das CANopen-Feldbus-Gerät oder der CANopen-Controller eine solche Routing-Funktionalität nicht bereitstellt, dann ist das Adressfeld ohne Bedeutung.

Unter Verwendung obiger Tunnel-Mechanismen können die in Fig. 1 dargestellten Feldbus-Geräte 24 - 40 in nur einem Schritt, d. h. mit einem Befehl von einer zentralen Stelle wie Bedien-PC 50 oder Controller 12, 14 konfiguriert bzw. parametriert werden. Dabei können die Controller 12, 14 über interne Routing-Funktionalitäten verfügen, so dass die MODBUS-Nachricht zu den zugehörigen Adressen der Feldbus-Geräte unter Beachtung von Adressregeln versendet werden kann.

Über die einzige Verbindung 52 zwischen dem Bedien-PC 50 und dem Controller 12 kann somit das gesamte Steuerprogramm (Controller Programm) als auch die Hardware-Konfiguration der Feldbus-Geräte 24 - 40 geladen werden.

Somit wird ein System zur Integration von Feldbus-Geräten in ein Automatisierungssystem zur Verfügung gestellt, welches mehrere Feldbus-Geräte umfasst, welche über Kommunikationsverbindungen zur Steuerung und Überwachung einer technischen Anlage verbunden sind.

Die Feldbus-Geräte sind über den zumindest einen Feldbus 20 bzw. 22 verbunden und können (müssen jedoch nicht) mit der Steuereinheit bzw. dem Controller 12, 14 verbunden sein.

Gemäß der Erfindung existiert eine Parametrierungs- und/oder Konfigurations-Software, welche auf dem Bediener-PC 50 abläuft und zwar zur Konfiguration und/oder Parametrisierung der einzelnen Feldgeräte 24 - 40, die derart konfiguriert sind, dass Daten des einzelnen Feldgerätes gespeichert werden können.

Ferner läuft eine einzige Programmier-Software auf dem Bedien-PC 50 zur Konfiguration und/oder zur Programmierung der Controller 12, 14.

Die auf dem Bedien-PC 50 ablaufende Programmier-Software zur Konfiguration und/oder Programmierung der Controller 12, 14 ist im Stande, die Parametrierungs-Software im verdeckten Modus (Hiding Mode) zu starten. Mittels der Software können die jeweiligen FELDBUS-Geräte konfiguriert und/oder parametrisiert werden. Ferner wird eine direkte Kommunikationsverbindung zwischen dem Bedien-PC 50 und den Feldbus-Geräten 24 - 40 über den Controller 12 hergestellt, um in den Feldbus-Geräten 24 - 40 die gesamte Datenkonfiguration der Feldbus-Geräte zu speichern. Dies wird sequentiell für jedes Feldbus-Gerät durchgeführt und sowie jedesmal, wenn ein Feldbus-Gerät an den Feldbus (CANopen) 20, 22 angeschlossen wird.

Die Controller 12, 14 benötigen keinen Zwischenspeicher, um eine Kopie der Daten zur Konfiguration des Feldbus-Gerätes anzulegen. Vielmehr ist das Feldbus-Gerät im Stande, eine direkte Kommunikation mit der Parametrierungs-Software zu akzeptieren, um eine Konfigurierung und/oder Parametrierung des jeweiligen Feldbus-Gerätes in derselben Zeit durchzuführen, die der Controller 12, 14 für die Überwachung, Bedienung und Diagnose des jeweiligen Feldbus-Gerätes benötigt.

Für den Download der kompletten Feldbus-Geräte-Konfiguration in jedes Feldbus-Gerät, welches mit dem Netzwerk verbunden wird, über nur "einen Klick" ist es nicht notwendig, dass Informationen der Feldbus-Geräte-Konfiguration in dem Controller 12, 14 gespeichert sind. Vielmehr erfolgt der Download aller Feldbus-Geräte-Konfigurationen in einem Durchgang, d. h. mit einem Klick.

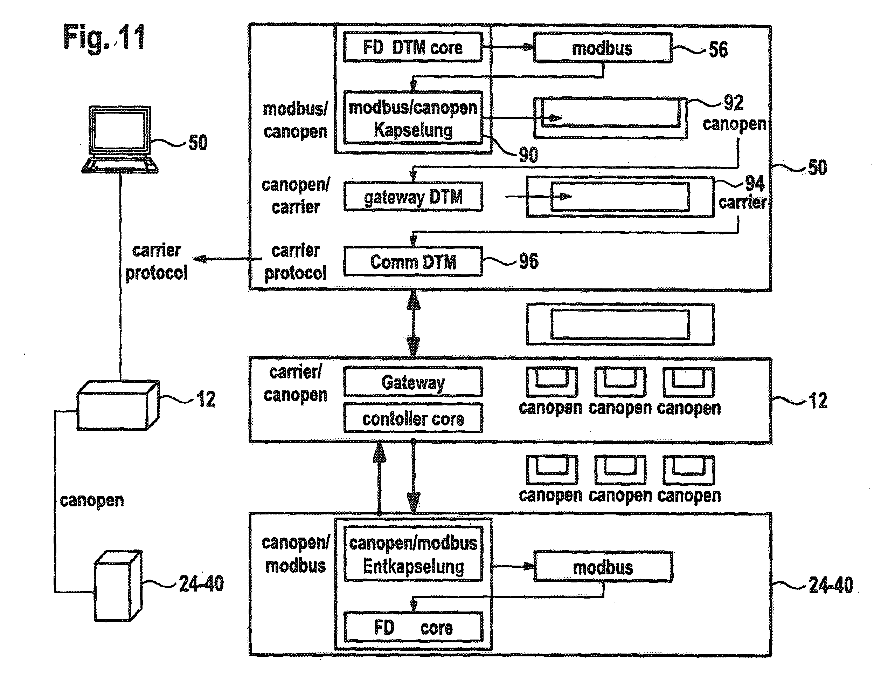

Eine Anwendung des zuvor beschriebenen Daten-Tunnel-Mechanismus auf die in Fig. 1 dargestellte Struktur wird anhand der Fig. 11 erläutert. In dem Bedien-PC 50 ist eine Software implementiert (FD DTM Core), mit der die Gerätebeschreibungsdatei 56 im Format MODBUS erzeugbar ist. Ferner ist ein Software-Tool 90 vorgesehen, um die MODBUS-Nachricht in eine CANopen-Nachricht einzukapseln, um einen CANopen-Frame 92 zu generieren, der beispielsweise über einen CANopen-Bus übertragbar ist. Im dargestellten Ausführungsbeispiel erfolgt eine weitere Kapselung des CANopen-Frames in einen Carrier-Frame 94, um den MODBUS-Frame über ein Carrier-Protokoll zu dem Controller 12 zu übertragen. Hierzu umfasst das Konfigurations-Tool 50 eine Schnittstelle (COMMDTM) 96.

In dem Controller 12 werden die CANopen-Frames entkapselt und in der Funktion als Router zu den jeweiligen Feldbus-Geräten mit den entsprechenden Adressen weitergeleitet.

In dem Feldbus-Gerät 24 - 40 ist ein CANopen-MODBUS-Retriever implementiert, welcher den MODBUS-Frame entkapselt, der sodann durch eine MODBUS-Schnittstelle (FD Core) des jeweiligen Feldgerätes interpretierbar und ausführbar ist.

## Patentansprüche

1. Verfahren zur Übertragung von Daten zwischen einem ersten Automatisierungsgerät (50, 12, 14, 18) wie Bedien-PC oder zentrales Steuergerät und zumindest einem zweiten Automatisierungsgerät (24, 40), wie Feldgerät, über einen CAN-open-Bus (20, 22) unter Verwendung eines Service-Daten-Objekts als SDO-Service, wobei über einen in dem ersten Automatisierungsgerät (50, 12, 14, 18) implementierten SDO-Client eine Download- oder Upload-Anfrage an einen in dem zumindest einen zweiten Automatisierungsgerät (24, 40) implementierten SDO-Server erfolgt, wobei die Daten durch eine in dem ersten Automatisierungsgerät (50, 12, 14, 18) oder dem zumindest einen zweiten Automatisierungsgerät (24 - 40) implementierte Anwendung (54, 84) in einen CANopen-Frame gekapselt werden, wobei der CANopen-Frame mit den gekapselten Daten per SDO-Service in ein oder aus einem in einem Objektverzeichnis (76) des SDO-Servers (82) definierten Daten-Tunnel-Objekt (80, 86) übertragen oder gesendet wird und wobei die gekapselten Daten durch die in dem ersten oder dem zumindest einen zweiten Automatisierungsgerät (24, 40) implementierte Anwendung (84) entkapselt werden,
**dadurch gekennzeichnet,**
**dass** das Verfahren verwendet wird zum Konfigurieren und/oder Parametrieren des zumindest einen einen MODBUS-Server aufweisenden zweiten Automatisierungsgeräts (24 - 40) über den CANopen-Bus (20, 22), dass die Daten als Konfigurations- und/oder Parametrierungsdaten in Form eines MODBUS-Frames erzeugt und in den CANopen-Frame gekapselt werden und dass der CANopen-Frame mittels SDO-download in das Daten-Tunnel-Objekt (80, 86) des SDO-Servers des zumindest einen zweiten Automatisierungsgerätes (24) geladen und entkapselt wird.

2. Verfahren nach Anspruch 1,
**dadurch gekennzeichnet,**
**dass** eine Datenübertragung von dem ersten Automatisierungsgerät (50) zu dem zumindest einen zweiten Automatisierungsgerät (24) durch einen SDO-Download zu dem Daten-Tunnel-Objekt (80) des Objektverzeichnisses (76) initiiert und durch die im ersten Automatisierungsgerät (50) implementierte Anwendung (54) ausgeführt wird.

3. Verfahren nach Anspruch 1 oder 2,
**dadurch gekennzeichnet,**
**dass** eine Datenübertragung von dem zumindest einen zweiten Automatisierungsgerät (24) zu dem ersten Automatisierungsgerät (50) durch einen SDO-Upload aus dem Daten-Tunnel-Objekt (80) initiiert und durch die im ersten Automatisierungsgerät (50) implementierte Anwendung (54) ausgeführt wird, wobei die Anwendung (54) die in dem zumindest einem zweiten Automatisierungsgerät (24) implementierte Anwendung (84) zyklisch anspricht.

4. Verfahren nach zumindest einem der vorhergehenden Ansprüche,
**dadurch gekennzeichnet,**
**dass** zur Datenübertragung ein vorgegebener SDO-Server-Kanal verwendet wird, wobei bei hohem Datenaufkommen ein zweiter SDO-Server-Kanal eingesetzt wird.

5. Verfahren nach zumindest einem der vorhergehenden Ansprüche,
**dadurch gekennzeichnet,**
**dass** für eine Simplex- oder Halb-Duplex-Datenübertragung über ein einziges Daten-Tunnel-Objekt (80) erfolgt.

6. Verfahren nach zumindest einem der vorhergehenden Ansprüche,
**dadurch gekennzeichnet,**
**dass** für eine Voll-Duplex-Datenübertragung zumindest zwei Daten-Tunnel-Objekte (80, 86) in dem Objektverzeichnis (76) des SDO-Servers verwendet werden.

7. Verfahren nach zumindest einem der vorhergehenden Ansprüche,
**dadurch gekennzeichnet,**
**dass** die in dem ersten Automatisierungsgerät (50) implementierte Anwendung (54) ein Feld-Geräte-Tool und zumindest einen Geräte-Typ-Manager umfasst, mittels denen die Parametrierungs- bzw. Konfigurationsdaten in Form des MODBUS-Frames erzeugt werden.

8. Verfahren nach zumindest einem der vorhergehenden Ansprüche,
**dadurch gekennzeichnet,**
**dass** bei einer Übertragung von Daten von dem zumindest einen zweiten Automatisierungsgerät (24) zu dem ersten Automatisierungsgerät (50) ein protokoll-spezifischer Teil des in dem ersten Automatisierungsgerät (50) implementierten Geräte-Typ-Managers (Device Type Manager (DTM)) das zumindest eine zweite Automatisierungsgerät (24) mit der Anwendung (84) regelmäßig anfragen muss, wobei eine in der Anwendung (84) implementierte CANopen-Kommunikation DTM die SDO-Upload-Anfrage ausführt.

9. Verfahren nach zumindest einem der vorhergehenden Ansprüche,
**dadurch gekennzeichnet,**
**dass** das Daten-Tunnel-Objekt (80, 86) vom Typ Domain ist.

10. Verfahren nach zumindest einem der vorhergehenden Ansprüche,
**dadurch gekennzeichnet,**
**dass** der CANopen-Frame mit gekapseltem MODBUS-Frame über eine in dem ersten Automatisierungsgerät (50) implementierte Routing-Funktionalität zu dem zumindest zweiten Automatisierungsgerät (24) mit zugehöriger Adresse gesendet wird.

11. Verfahren nach zumindest einem der vorhergehenden Ansprüche,
**dadurch gekennzeichnet,**
**dass** als gekapselte Daten Parameter- und/oder Konfigurationsdaten sowie Steuerprogramme übertragen werden.

12. Verfahren nach zumindest einem der vorhergehenden Ansprüche,
**dadurch gekennzeichnet,**
**dass** die Datenübertragung sequentiell für jedes der zweiten Automatisierungsgeräte (24-40) ausgeführt wird und/oder dann ausgeführt wird, wenn eines der zweiten Automatisierungsgeräte (24-40) an den CANopen-Bus (20, 22) angeschlossen wird.

## Claims

1. Method for transmitting data between a first automation device (50, 12, 14, 18), such as a user PC or a central control device, and at least one second automation device (24, 40), such as a field device, via a CANopen bus (20, 22) using a service data object as an SDO service, wherein via an SDO client implemented in the first automation device (50, 12, 14, 18) a download or upload request is sent to an SDO server implemented in the at least one second automation device (24, 40), wherein the data are encapsulated in a CANopen frame by an application (54, 84) implemented in the first automation device (50, 12, 14, 18) or the at least one second automation device (24, 40), wherein the CANopen frame with the encapsulated data is transmitted or sent by means of an SDO service into or out of a data tunnel object (80, 86) defined in an object dictionary (76) of the SDO server (82), and wherein the encapsulated data are decapsulated by the application (84) implemented in the first or the at least one second automation device (24, 40),
**characterized in that**
the method is used to configure and/or parameterize via the CANopen bus (20, 22) the at least one second automation device (24 - 40) that includes a MODBUS server, **in that** the data are generated as configuration and/or parameterization data in the form of a MODBUS frame and encapsulated in said CANopen frame, and **in that** the CANopen frame is loaded by way of an SDO download into the data tunnel object (80, 86) of the SDO server of the at least one second automation device (24) and decapsulated.

2. Method according to claim 1,
**characterized in that**
a data transmission from the first automation device (50) to the at least one second automation device (24) by way of an SDO download to the data tunnel object (80) of the object dictionary (76) is initiated, and carried out by the application (54) implemented in the first automation device (50).

3. Method according to claim 1 or 2,
**characterized in that**
a data transmission from the at least one second automation device (24) to the first automation device (50) by way of an SDO upload from the data tunnel object (80), is initiated, and carried out by the application (54) implemented in the first automation device (50), wherein the application (54) cyclically addresses the application (84) implemented in the at least one second automation device (24).

4. Method according to at least one of the preceding claims,
**characterized in that**
a preset SDO server channel is used for data transmission, wherein a second SDO server channel is used in the event of high data volume.

5. Method according to at least one of the preceding claims,
**characterized in that**
a simplex or half-duplex data transmission takes place via a single data tunnel object (80).

6. Method according to at least one of the preceding claims,
**characterized in that**
for a full-duplex data transmission at least two data tunnel objects (80, 86) in the object dictionary (76) of the SDO server are used.

7. Method according to at least one of the preceding claims,
**characterized in that**
the application (54) implemented in the first automation device (50) comprises a field device tool and at least one device type manager by means of which the parameterization and configuration data, respectively, are generated in the form of the MODBUS frame.

8. Method according to at least one of the preceding claims,
**characterized in that**
during a transmission of data from the at least one second automation device (24) to the first automation device (50) a protocol-specific part of the device type manager (DTM) implemented in the first automation device (50) must regularly query the at least one second automation device (24) with the application (84), whereby a CANopen communication DTM implemented in the application (84) executes the SDO upload request.

9. Method according to at least one of the preceding claims,
**characterized in that**
the data tunnel object (80, 86) is of the domain type.

10. Method according to at least one of the preceding claims,
**characterized in that**
the CANopen frame with the encapsulated MODBUS frame is sent via a routing functionality implemented in the first automation device (50) to the at least second automation device (24) with the appropriate address.

11. Method according to at least one of the preceding claims,
**characterized in that**
parameter and/or configuration data and control programs are transmitted as encapsulated data.

12. Method according to at least one of the preceding claims,
**characterized in that**
the data transmission is carried out sequentially for each of the second automation devices (24-40) and/or is carried out when one of the second automation devices (24-40) is attached to the CANopen bus (20, 22).

## Revendications

1. Procédé de transmission de données entre un premier appareil d'automatisation (50, 12, 14, 18), tel qu'un PC d'opération ou un organe de commande central, et au moins un deuxième appareil d'automatisation (24, 40), tel qu'un appareil de terrain, via un bus CANopen (20, 22) en utilisant un objet de données de service (*Service Data Object -* SDO) en tant que service SDO, sachant que via un client SDO implémenté dans le premier appareil d'automatisation (50, 12, 14, 18) est effectuée une demande de téléchargement (download) ou de téléversement (upload) à un serveur SDO implémenté dans l'au moins un deuxième appareil d'automatisation (24, 40), que les données sont encapsulées dans une trame CANopen par une application (54, 84) implémentée dans le premier appareil d'automatisation (50, 12, 14, 18) ou l'au moins un deuxième appareil d'automatisation (24 - 40), que la trame CANopen comportant les données encapsulées est reçue ou envoyée par service SDO par ou depuis un objet de tunnel de données (80, 86) défini dans un répertoire d'objets (76) du serveur SDO (82), et que les données encapsulées sont désencapsulées par l'application (84) implémentée dans le premier ou l'au moins un deuxième appareil d'automatisation (24, 40),
**caractérisé en ce**
**que** le procédé est utilisé pour configurer et/ou paramétrer au moyen du bus CANopen (20, 22) l'au moins un deuxième appareil d'automatisation (24 - 40) possédant un serveur MODBUS, que les données sont créées en tant que données de configuration et/ou de paramétrage sous forme d'une trame MODBUS et encapsulées dans la trame CANopen, et que ladite trame CANopen est chargée et désencapsulée par téléchargement SDO dans l'objet de tunnel de données (80, 86) du serveur SDO de l'au moins un deuxième appareil d'automatisation (24).

2. Procédé selon la revendication 1,
**caractérisé en ce**
**qu'**une transmission de données du premier appareil d'automatisation (50) vers l'au moins un deuxième appareil d'automatisation (24) est lancée par un téléchargement SDO vers l'objet de tunnel de données (80) du répertoire d'objets (76) et exécutée par l'application (54) implémentée dans le premier appareil d'automatisation (50).

3. Procédé selon la revendication 1 ou 2,
**caractérisé en ce**
**qu'**une transmission de données de l'au moins un deuxième appareil d'automatisation (24) vers le premier appareil d'automatisation (50) est lancée par un téléversement SDO depuis l'objet de tunnel de données (80) et exécutée par l'application (54) implémentée dans le premier appareil d'automatisation (50), sachant que l'application (54) interroge cycliquement l'application (84) implémentée dans l'au moins un deuxième appareil d'automatisation (24).

4. Procédé selon au moins une des revendications précédentes,
**caractérisé en ce**
**qu'**un canal de serveur SDO prédéfini est utilisé pour la transmission de données, un second canal de serveur SDO étant mis en oeuvre si le volume de données est élevé.

5. Procédé selon au moins une des revendications précédentes,
**caractérisé en ce**
**que** pour une transmission de données en mode simplex ou semi-duplex est utilisé un seul objet de tunnel de données (80).

6. Procédé selon au moins une des revendications précédentes,
**caractérisé en ce**
**que** pour une transmission de données en mode duplex intégral sont utilisés au moins deux objets de tunnel de données (80, 86) dans le répertoire d'objets (76) du serveur SDO.

7. Procédé selon au moins une des revendications précédentes,
**caractérisé en ce**
**que** l'application (54) implémentée dans le premier appareil d'automatisation (50) comprend un outil d'appareil de terrain et au moins un gestionnaire de type d'appareil, au moyen desquels les données de paramétrage et/ou de configuration sont créés sous forme de la trame MODBUS.

8. Procédé selon au moins une des revendications précédentes,
**caractérisé en ce**
**que** lors d'une transmission de données de l'au moins un deuxième appareil d'automatisation (24) vers le premier appareil d'automatisation (50), une partie spécifique au protocole du gestionnaire de type d'appareil (*Device Type Manager* (DTM)) implémenté dans le premier appareil d'automatisation (50) doit interroger régulièrement l'au moins un deuxième appareil d'automatisation (24) au moyen de l'application (84), sachant qu'un DTM de communication CANopen implémenté dans l'application (84) exécute la demande de téléversement SDO.

9. Procédé selon au moins une des revendications précédentes,
**caractérisé en ce**
**que** l'objet de tunnel de données (80, 86) est du type domaine.

10. Procédé selon au moins une des revendications précédentes,
**caractérisé en ce**
**que** la trame CANopen comportant la trame MODBUS encapsulée est envoyée avec adresse associée vers l'au moins un deuxième appareil d'automatisation (24) au moyen d'une fonctionnalité de routage implémentée dans le premier appareil d'automatisation (50).

11. Procédé selon au moins une des revendications précédentes,
**caractérisé en ce**
**que** des données de paramétrage et/ou de configuration ainsi que des programmes de pilotage sont transmis en tant que données encapsulées.

12. Procédé selon au moins une des revendications précédentes,
**caractérisé en ce**
**que** la transmission de données est exécutée de manière séquentielle pour chacun des deuxièmes appareils d'automatisation (24 - 40) et/ou est exécutée quand l'un des deuxièmes appareils d'automatisation (24-40) est connecté au bus CANopen (20, 22).
